# EUROPEAN PATENT SPECIFICATION

(11) **EP 3 813 394 B1**
(45) Date of publication and mention of the grant of the patent: **15.01.2025**
(21) Application number: 18923492.5
(22) Date of filing: 19.06.2018
(51) Int. Cl.: H04W 4/46, H04W 84/20, H04W 4/40

(54) **USER DEVICE AND BASE STATION DEVICE**
BENUTZERVORRICHTUNG UND BASISSTATIONSVORRICHTUNG
DISPOSITIF UTILISATEUR ET DISPOSITIF DE STATION DE BASE

(43) Date of publication of application: 28.04.2021
(73) Proprietor: NTT DOCOMO, INC., Chiyoda-ku Tokyo 100-6150 (JP)
(72) Inventor: OSAWA, Ryosuke, Tokyo 100-6150 (JP); WANG, Huan, Beijing, 100190 (CN); ZHENG, Xufei, Beijing, 100190 (CN); HOU, Xiaolin, Beijing, 100190 (CN)
(74) Representative: Hoffmann Eitle
(86) International application number: PCT/JP2018/023347
(87) International publication number: WO 2019/244256

(56) References cited:
- EP-A1- 3 316 657
- WO-A1-2015/140920
- WO-A1-2017/048100
- CN-A- 108 012 244
- US-A1- 2017 331 670
- NTT DOCOMO; INC: "Resource allocation mechanism", 3GPP DRAFT; R1-1809159, 24 August 2018 (2018-08-24), Gothenburg, Sweden, pages 1 - 7, XP051516529
- LENOVO; MOTOROLA MOBILITY: "Resource allocation mechanism in NR", 3GPP DRAFT; R1-1808556, 24 August 2018 (2018-08-24), Gothenburg, Sweden, pages 1 - 2, XP051515933

## Description

### TECHNICAL FIELD

The present invention relates to user equipment and a base station apparatus in a radio communication system.

### BACKGROUND ART

In LTE (Long Term Evolution) and successor systems of LTE (for example, LTE-A (LTE Advanced), NR (New Radio, also referred to as 5G)), D2D (Device to Device) techniques have been studied in which user devices directly communicate with each other without going through a radio base station (for example, Non-Patent Document 1).

D2D decreases traffic between user equipment and a base station apparatus, and enables communication between user devices even if a base station apparatus is unable to communicate such as at the time of disaster. Although D2D is called as "sidelink" in 3GPP (3rd Generation Partnership Project), D2D that is a more general term is used in this specification. However, the sidelink may be also used as appropriate in the description of the embodiment set forth below.

D2D is roughly classified into D2D discovery (which is also referred to as D2D discovery, D2D detection) for discovering any other user equipment that can communicate and D2D communication (which is also referred to as D2D direct communication, D2D communication, inter-terminal direct communication, etc.) for direct communication between user devices. Hereinafter, when D2D communication, D2D discovery, and the like are not distinguished from each other in particular, they are simply called as D2D. A signal transmitted or received in D2D is called as a D2D signal. Various use cases of services related to V2X (Vehicle to Everything) in LTE and eV2X (enhanced V2X) in 5G have been studied (for example, Non-Patent Document 2).

### Prior Art Document

### [Non-Patent Document]

Non-Patent Document 1: 3GPP TS 36.211 V15.1.0 (2018-03)
Non-Patent Document 2: 3GPP TR 22.886 V15.1.0 (2017-03)

### [Patent Documents]

US 2017/331670 A1 relates to a method for a wireless device that includes determining a reporting quality threshold for a parameter related to channel state information; performing a measurement for each of a plurality of beams from a first predetermined set of beams for evaluation; evaluating the measurement for each of the plurality of beams against the reporting quality threshold; discontinuing the performing and evaluating of measurements in response to determining that the reporting quality threshold is met for one of the beams and reporting, to the wireless communications network, CSI for the one of the beams.

WO 2017/048100 A1 relates to a method for transmitting data by a UE in a wireless communication system comprising the steps of transmitting a first message through time-frequency resources and, if a UE must transmit a second message which is related to the first message, transmitting the second message through a frequency resource region which is the same as a frequency resource region in the time-frequency resources

after predetermined time from the time-frequency resources.

### SUMMARY OF THE INVENTION

### [PROBLEM TO BE SOLVED BY THE INVENTION]

It has been studied to form a cluster that is a group including a plurality of user devices in D2D communication in which V2X or eV2X is assumed. However, a method for operating a cluster is not clarified, such as formation and maintenance of the cluster, determination of user equipment to be added to the cluster, or determination of a resource to be used by the cluster.

The present invention has been accomplished in view of the above-described point, and an object is to operate a cluster to which a plurality of terminals belongs and use radio resources efficiently in inter-terminal direct communication.

### [MEANS FOR SOLVING THE PROBLEM]

The invention is defined by the appended claims. According to a technique of the present disclosure, there is provided a user equipment including a measuring unit that executes sensing of a resource set with which signals from one or more other units of user equipment are transmitted; a control unit that determines, based on a measurement result of the resource set by the sensing, whether to operate as a first device that allocates a resource in the resource set associated with a cluster or to operate as a second device to which a resource is allocated by the first device in the cluster formed of a plurality of units of user equipment; and a communication unit that executes communication with the one or more other units of user equipment.

### [ADVANTAGE OF THE INVENTION]

According to the technique of the present disclosure, it is possible to operate a cluster to which a plurality of terminals belongs and use radio resources efficiently in inter-terminal direct communication.

### BRIEF DESCRIPTION OF DRAWINGS

Fig. 1A is a diagram for illustrating an example (1) of a radio communication system.
Fig. 1B is a diagram for illustrating an example (2) of a radio communication system.
Fig. 1C is a diagram for illustrating a radio communication system in an embodiment of the present invention.
Fig. 2 is a diagram for illustrating resource sets in an embodiment of the present invention.
Fig. 3 is a diagram for illustrating operations of a user equipment 20 in an embodiment of the present invention.
Fig. 4A is a diagram illustrating an example (1) of resource sets in an embodiment of the present invention.
Fig. 4B is a diagram illustrating an example (2) of resource sets in an embodiment of the present invention.
Fig. 4C is a diagram illustrating an example (3) of resource sets in an embodiment of the present invention.
Fig. 5 is a diagram for illustrating an example (1) of a sensing operation in an embodiment of the present invention.
Fig. 6 is a diagram for illustrating occupation status of resource sets in an embodiment of the present invention.
Fig. 7 is a diagram for illustrating a sensing UE transitioning to a member in an embodiment of the present invention.
Fig. 8 is a diagram for illustrating a sensing UE transitioning to a header in an embodiment of the present invention.
Fig. 9 is a diagram for illustrating an example of an operation of transitioning to a header or member again in an embodiment of the present invention.
Fig. 10 is a diagram for illustrating an example (2) of a sensing operation in an embodiment of the present invention.
Fig. 11 is a sequence diagram for illustrating operations assisted by a base station apparatus 10 in an embodiment of the present invention.
Fig. 12 is a diagram illustrating an example of a functional configuration of a base station apparatus 10 in an embodiment of the present invention.
Fig. 13 is a diagram illustrating an example of a functional configuration of a user equipment 20 in an embodiment of the present invention.
Fig. 14 is a diagram illustrating an example of a hardware configuration of a base station apparatus 10 and a user equipment 20 in an embodiment of the present invention.

### [EMBODIMENTS OF THE INVENTION]

In the following, embodiments of the present invention are described with reference to the accompanying drawings. The embodiments described below are only examples and embodiments to which the present invention is applied are not limited to the following embodiments.

For operations of a radio communication system according to the embodiments of the present invention, existing techniques are used as appropriate. Although such an existing technique is, for example, existing LTE, the existing techniques are not limited to existing LTE. The term "LTE" as used in this specification has a broad meaning including LTE-Advanced and schemes after LTE-Advanced (for example, NR) unless otherwise specified.

In the embodiments of the present invention, a duplex scheme may be a TDD (Time Division Duplex) scheme, an FDD (Frequency Division Duplex) scheme, or another (for example, Flexible Duplex or the like) scheme different from these schemes. In the following description, a method of transmitting a signal using a transmit beam may be digital beamforming for transmitting the signal multiplied by a precoding vector (precoded with the precoding vector) or analog beamforming for embodying beamforming using a variable phase shifter within an RF (Radio Frequency) circuit. Similarly, a method of receiving a signal using a receive beam may be digital beamforming for multiplying the received signal by a predetermined weight vector or analog beamforming for embodying beamforming using a variable phase shifter within an RF circuit. A hybrid beamforming combining the digital beamforming with the analog beamforming may be applied. Transmitting a signal using a transmit beam may be transmitting the signal via a particular antenna port. Similarly, receiving a signal using a receive beam may be receiving the signal via a particular antenna port. An antenna port refers to the logical antenna port or physical antenna port defined in the 3GPP standard.

A method of forming a transmit beam and receive beam is not limited to the above method. For example, in a base station apparatus 10 and a user equipment 20 each comprising a plurality of antennas, a method of changing an angle of each antenna may be used, a method of combining the method using the precoding vector with the method of changing the angle of each antenna may be used, different antenna panels may be utilized to be switched, a method of combining a method of using a plurality of antenna panels together may be used, or another method may be used. Also, for example, a plurality of transmit beams different from each other may be used in a high frequency band. Using a plurality of transmit beams is referred to as multibeam operation and using one transmit beam is referred to as single-beam operation.

In the embodiments of the present invention, the phrase "a radio parameter or the like is 'configured' or 'set'" may mean that a predetermined value is pre-configured or pre-set, or mean that a radio parameter transmitted from a base station apparatus 10 or a user equipment 20 is configured or set.

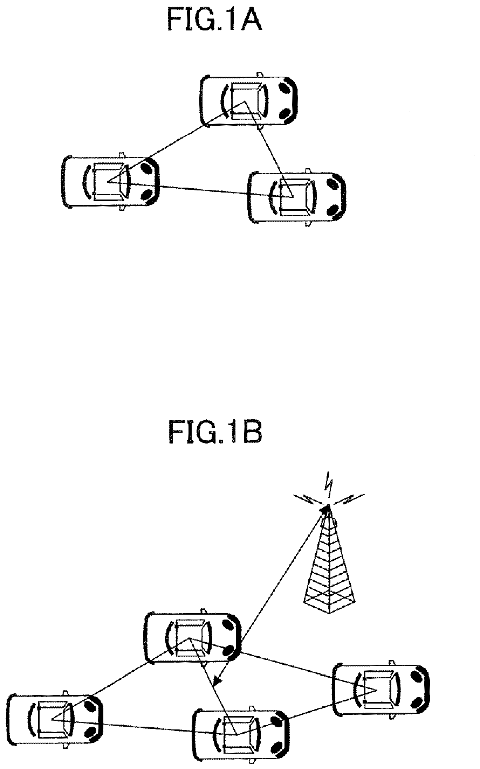

Fig. 1A is a diagram for illustrating an example (1) of a radio communication system. In 3GPP, it has been studied to embody V2X (Vehicle to Everything) or eV2X (enhanced V2X) by extending D2D functionality, and specification has been advanced. V2X is a part of ITS (Intelligent Transport Systems), and is a general term of V2V (Vehicle to Vehicle) meaning a communication form in which communication is performed between vehicles; V2I (Vehicle to Infrastructure) meaning a communication form in which communication is performed between a vehicle and an RSU (Road-Side Unit) provided on a road side; V2N (Vehicle to Nomadic device) meaning a communication form in which communication is performed between a vehicle and a mobile terminal that a driver possesses; and V2P (Vehicle to Pedestrian) meaning a communication form in which communication is performed between a vehicle and a mobile terminal that a pedestrian possesses.

In the embodiments of the present invention, an example in which a communication device is installed in a vehicle is assumed mainly, but the embodiments of the present invention are not limited to this example. For example, the communication device may be a terminal that a person possesses, the communication device may be a device installed in a drone or aircraft, or the communication device may be a base station, an RSU, a relay station or the like.

In Rel-14 of LTE, specification regarding some functions of V2X has been made. In the specification, with respect to resource allocation for V2X communication to a user equipment 20, Mode 3 and Mode 4 are defined. In Mode 3, a transmit resource is dynamically allocated by DCI (Downlink Control Information) transmitted from a base station apparatus 10 to a user equipment 20. In Mode 3, SPS (Semi Persistent Scheduling) is also possible. In Mode 4, a user equipment 20 autonomously selects a transmit resource from a resource pool.

In 3GPP, V2X with inter-terminal communication and cellular communication of LTE or NR has been studied. For V2X of LTE or NR, it is presumed that study that is not limited to the 3GPP specification will be advanced. For example, it is presumed that securing interoperability, cost efficiency with implementation of a higher layer, a method of combining, or switching between, a plurality of RATs (Radio Access Technologies), addressing a regulation in each country, methods of data acquisition, delivery, database management, and utilization of a V2X platform of LTE or NR, and the like will be studied.

In general, MAC (Media Access Control) configurations of an ad-hoc network such as V2X include three types: distributed; semi-distributed; and centralized. Fig. 1A illustrates a configuration example of a distributed type MAC including three units of user equipment 20. In a distributed type MAC, there is no coordinator that performs resource allocation. For example, 802.11p, LTE Sidelink transmission mode-4 or the like corresponds to the distributed type MAC. Disadvantages of the distributed type MAC include the following. In LTE-V (Vehicle) mode 4, periodic traffic is assumed and it is not suited for non-periodic traffic. In 802.11p having a CSMA (Carrier Sense Multiple Access) based MAC, resource conflicts occur frequently, and in a situation where there are many terminals, the requirement of high reliability may be unable to be satisfied.

Fig. 1B is a diagram for illustrating an example (2) of a radio communication system. Fig. 1B illustrates a configuration example of a centralized type MAC including four units of user equipment 20. In a centralized type MAC, a base station apparatus 10 performs resource allocation as a coordinator. For example, LTE Sidelink transmission mode-3 or the like corresponds to the centralized type MAC. Disadvantages of the centralized type MAC include the following. It is not possible to operate outside coverage. A base station apparatus has an influence such that an overhead regarding an SR (Scheduling Request) and a BSR (Buffer Status Report) is too large. For example, if many UE-mounted vehicles transmit SRs and BSRs, an overhead of about 10ms is predicted. A network needs to support a low latency SR procedure. A gNB or eNB needs to provide HRLLC (High-Reliable and Low Latency Communications) support to all coverages.

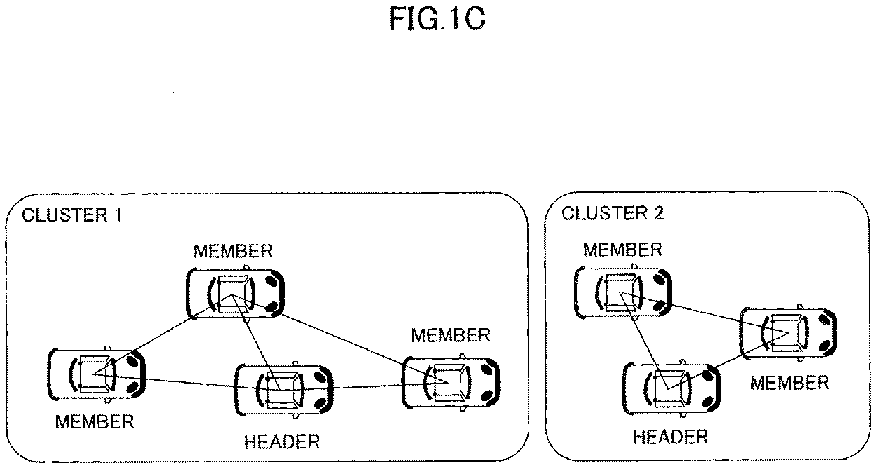

Fig. 1C is a diagram for illustrating a radio communication system in an embodiment of the present invention. Fig. 1C illustrates a configuration example of a semi-distributed type MAC, in which a cluster 1 including four units of user equipment 20 and a cluster 2 including three units of user equipment 20 are present. A cluster is a group formed of a user equipment 20 that is a header and a user equipment 20 that is a member. In a semi-distributed type MAC, a user equipment 20 performs resource allocation as a coordinator. In the semi-distributed type MAC, a plurality of units of user equipment 20 is divided into clusters each formed of one or more units of user equipment 20, and scheduling is performed from a user equipment 20 that is a header to a user equipment 20 that is a member. Scheduling of the semi-distributed type MAC can overcomes the above disadvantages of the distributed type MAC or the centralized type MAC. A header is a user equipment 20 that allocates a resource used for inter-terminal direct communication within resource sets associated with a cluster formed of a plurality of units of user equipment 20 to the other user equipment(s) 20 in the cluster. A member is a user equipment 20 to which a resource used for inter-terminal direct communication is allocated from a user equipment 20 that is a header in a cluster formed of a plurality of units of user equipment 20.

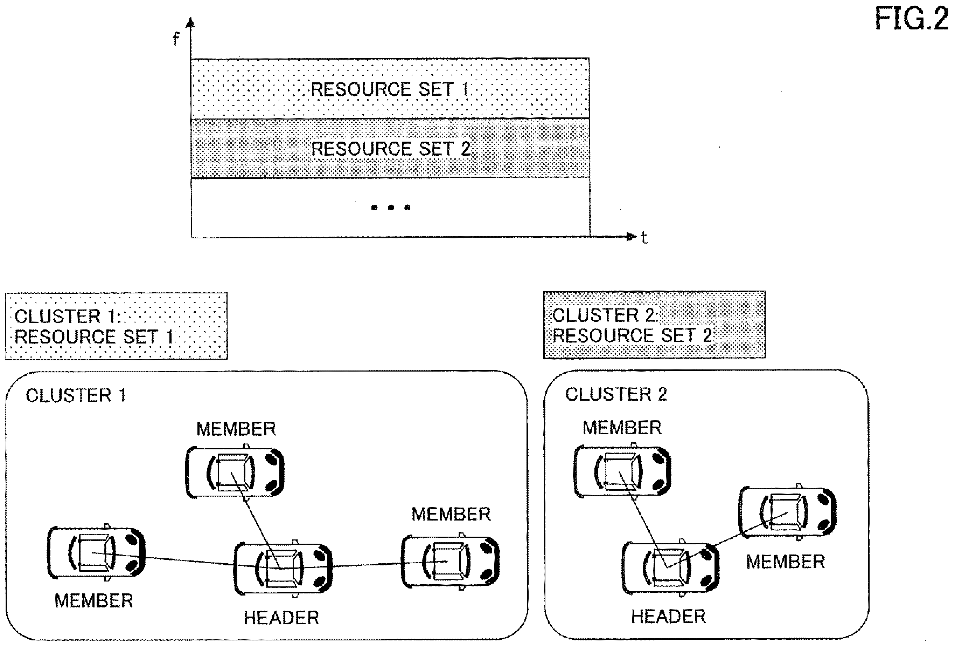

Fig. 2 is a diagram for illustrating resource sets in an embodiment of the present invention. For methods of implementing a semi-distributed type MAC within coverage and outside coverage, a method of performing formation and maintenance of a cluster including a method of determining a header and a member of the cluster and a method of determining resource sets that can be used in the cluster was not clarified. Also, a method of scheduling by the header of the cluster was not clarified.

Accordingly, resources in a frequency band or the time domain are divided into a plurality of resource sets. A resource set is associated with a cluster and configured or pre-defined. A user equipment 20 performs sensing on the resource sets. The user equipment 20 determines whether to become a header of the cluster or become a member of the cluster based on a result of the sensing. If the user equipment 20 becomes the header of the cluster, a resource set associated with the cluster is determined. One or more resource sets may be associated with one cluster. If the user equipment 20 becomes the member of the cluster, an association is formed with a header of the cluster. The header of the cluster allocates a resource within the resource sets associated with the cluster to a member of the cluster. The operation of determining whether the user equipment 20 becomes the header of the cluster or becomes the member of the cluster may be performed again periodically or performed again via an event trigger.

As illustrated in Fig. 2, a resource set 1 is associated with a cluster 1, and a user equipment 20 that is a header of the cluster 1 allocates resources within the resource set 1 to units of user equipment 20 that are members of the cluster 1. Also, as illustrated in Fig. 2, a resource set 2 is associated with a cluster 2, and a user equipment 20 that is a header of the cluster 2 allocates resources within the resource set 2 to units of user equipment 20 that are members of the cluster 2.

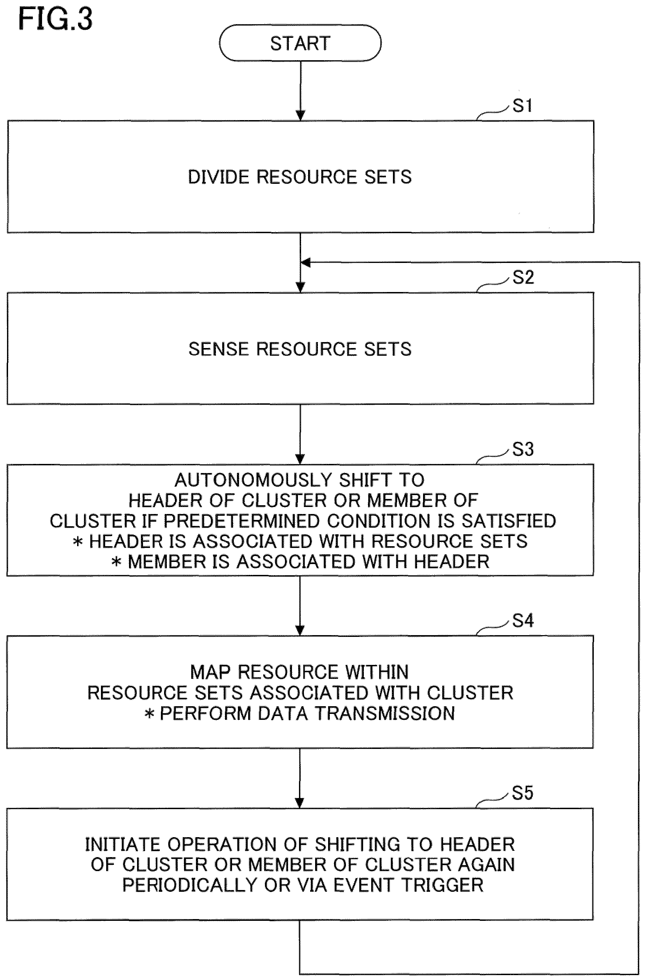

Fig. 3 is a diagram for illustrating operations of a user equipment 20 in an embodiment of the present invention. Fig. 3 illustrates an overview of operations of the user equipment 20 regarding a cluster. A detail of each step is described below.

In step S1, resource sets are divided and configured. Each resource set is of resources used for a sidelink, and may be pre-defined or configured. Then, the user equipment 20 senses the resource sets (step S2).

In step S3, if the user equipment 20 satisfies a predetermined condition based on a result of the sensing, the user equipment 20 autonomously transitions to a header of the cluster or a member of the cluster. Here, the term "transition" corresponds to the user equipment 20 becoming the header or member of the cluster, and may mean that the user equipment 20 "shifts" to the header or member of the cluster, mean that the user equipment 20 is "changed" to the header or member of the cluster, or mean that the user equipment 20 "switches" to the header or member of the cluster. The header of the cluster is associated with one or more resource sets. The member of the cluster is associated with the header of the cluster. Then, the header of the cluster allocates a resource within the resource sets associated with the cluster to a member of the cluster (step S4). The member of the cluster performs data transmission using the resource allocated by the header of the cluster.

In step S5, the user equipment 20 initiates an operation of transitioning to a header or member of the cluster again periodically or via an event trigger, and proceeds to step S2.

Here, for formation of a cluster into which a plurality of units of user equipment 20 is divided, as in step S3, if each user equipment 20 satisfies a predetermined condition, the cluster may be formed by transitioning to a header or member of the cluster, or the cluster may be formed by a certain user equipment 20 or base station apparatus 10 actively determining whether each user equipment 20 transitions to a header or member of the cluster to notify each user equipment 20 of the determination.

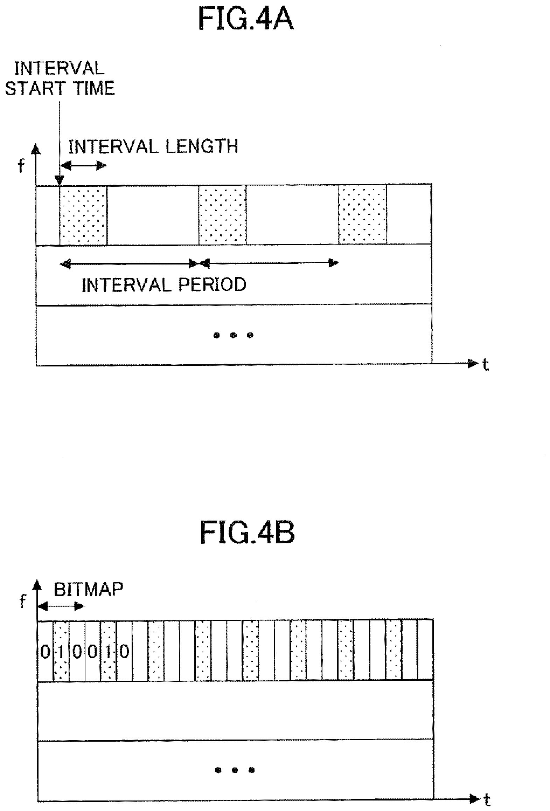

Fig. 4A is a diagram illustrating an example (1) of resource sets in an embodiment of the present invention. Resources of the entire system are divided into a plurality of resource sets (or resources). For example, the resource sets illustrated in Fig. 4A are specified in the time domain, and a header of a cluster notifies a member of a cluster of the resource set with an interval start time, interval length, and interval period of the resource set. Note that the header of the cluster may notify the member of the cluster of the resource set specified with an interval start position, interval length, and interval period, with respect to the frequency domain.

Fig. 4B is a diagram illustrating an example (2) of resource sets in an embodiment of the present invention. For example, the resource sets illustrated in Fig. 4B are formed of some of resources divided at a predetermined interval in the time domain. A header of a cluster notifies a member of the cluster with bitmap indicating each divided resource included in the resource set. In the bitmap, "1" may indicate that the resource is included in the resource set and "0" may indicate that the resource is not included in the resource set, for example.

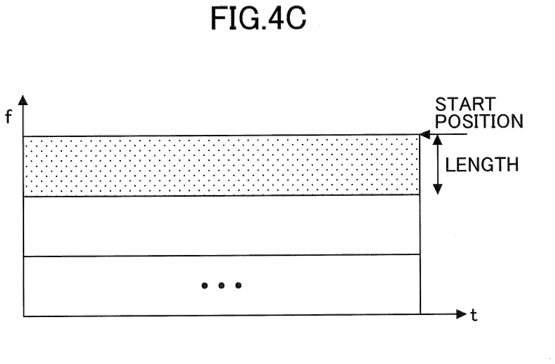

Fig. 4C is a diagram illustrating an example (3) of resource sets in an embodiment of the present invention. For example, the resource sets illustrated in Fig. 4C are divided in the frequency domain, and a header of a cluster notifies a member of the cluster of the resource set with a start position and length. The resource sets specified in the frequency domain as illustrated in Fig. 4C may be formed of resources further divided with an interval start time, interval length, and interval period in the time domain.

Also, for example, a header of a cluster notifies a member of the cluster of the resource set with bitmap corresponding to each region divided in the frequency domain. In the bitmap, "1" may indicate that the region is included in the resource set and "0" may indicate that the region is not included in the resource set, for example.

Also, for example, the resource set may be indicated by an index corresponding to a pre-defined pattern specified in the time domain or the frequency domain. The pattern may be specified in only the time domain, specified in only the frequency domain, or specified in the both time domain and the frequency domain.

The resource set may be configurable for each cell. For example, a base station apparatus 10 that is a gNB or eNB may configure a user equipment 20 via a PBCH (Physical Broadcast Channel) or RRC signaling. Also, the resource set may be configured or pre-defined for each user equipment. Also, the resource set may be configured or pre-defined for each resource pool.

Also, the resource set may be specified in a domain other than the time domain or the frequency domain. For example, the resource set may be specified in a space domain, a code domain, or a power domain.

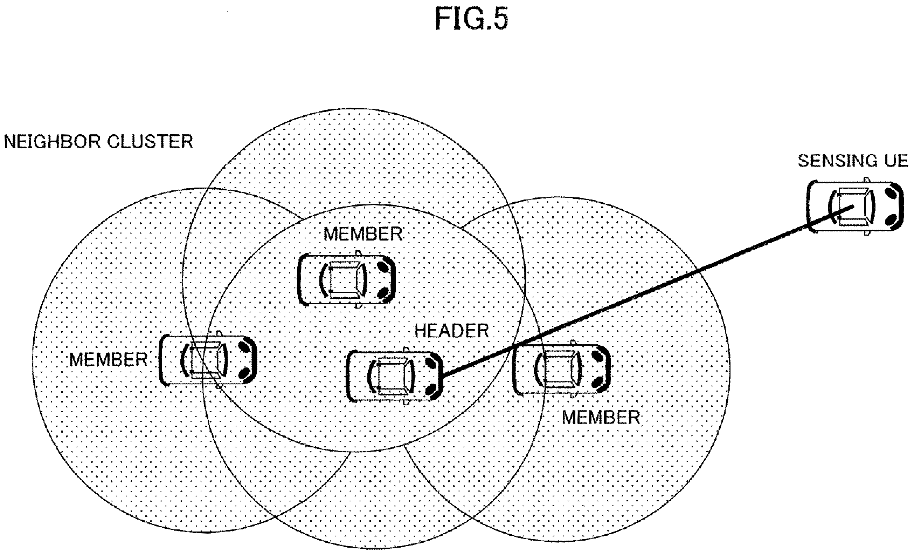

Fig. 5 is a diagram for illustrating an example (1) of a sensing operation in an embodiment of the present invention. Sensing is performed by a user equipment 20. The sensing may be based on power measurement using an indicator such as an RSRP (Reference Signal Received Power), RSSI (Received Signal Strength Indicator), RSRQ (Reference Signal Received Quality), SINR (Signal to Noise Interference Ratio) or the like. As illustrated in Fig. 5, the user equipment 20 senses a neighbor cluster as a sensing UE. The sensing may be performed for estimating a distance between the sensing UE and the neighbor cluster.

The user equipment 20 may perform background sensing. That is, the user equipment 20 may perform the sensing all the time.

The power measurement may be performed for each resource set. Further, the following operations 1) to 6) may be performed.
1) A measurement result is calculated by averaging measurement results over all resources included in one resource set. The measurement result averaged over all resources becomes a final measurement result.
2) A measurement result is calculated by averaging measurement results over resources in which the measurement results exceed a configured or pre-defined threshold. The measurement result becomes a final measurement result.
3) A measurement result is calculated by averaging measurement results over resources whose RSRPs, RSSIs, RSRQs, or SINRs lie within the top x%. The measurement result becomes a final measurement result.
4) A measurement result that is the best among one resource set becomes a final measurement result.
5) If a signaling from a header of a cluster is measured, a measurement result of the signaling becomes a final measurement result. Alternatively, if a signaling from a header of a cluster is measured, the averaging of any of 1) to 4) above may be performed by weighting a measurement result of the signaling higher. An assistance signaling from a base station apparatus 10 may be used to calculate a measurement result. Details of the assistance signaling are described below.
6) A combination of all of the above methods 1) to 5) may be performed.

Power measurement may be performing RSRP measurement with a DMRS (Demodulation reference signal), an SLSS (Sidelink synchronization signal) or another SL reference signal, or performing RSSI, RSRQ, or SINR measurement with an SL channel. Also, power measurement can be replaced with any other measurement indicating channel quality or channel interference.

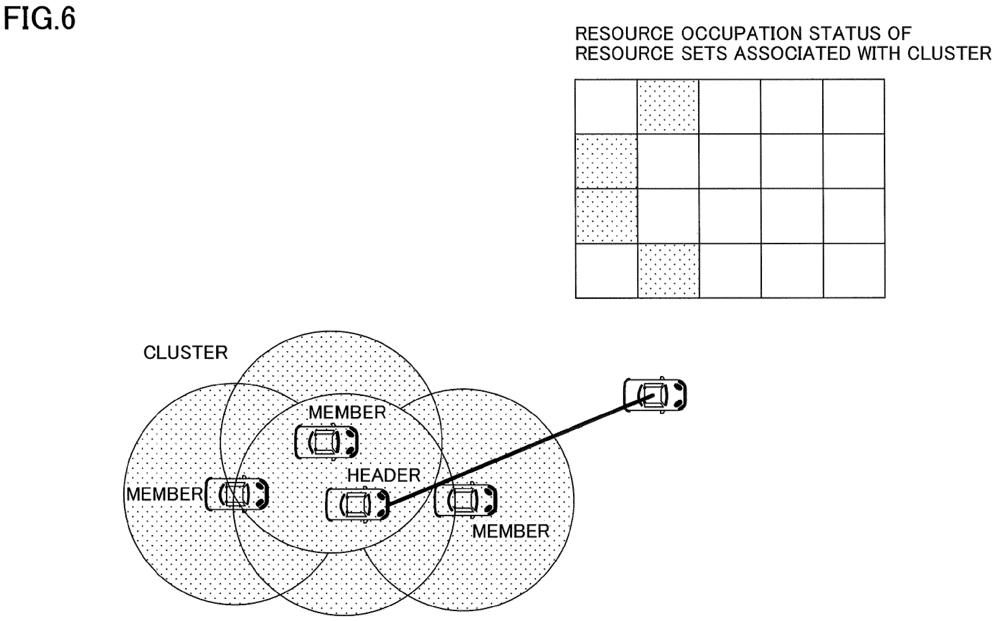

Fig. 6 is a diagram for illustrating occupation status of resource sets in an embodiment of the present invention. A resource occupation ratio may be measured for each resource set. A resource occupation ratio is a numerical value that is the number of resources in which a power that exceeds a configured or pre-defined threshold is measured among all resources included in a resource set divided by the number of all resources included in the resource set. Calculation of the resource occupation ratio may be performed in a configured or pre-defined period or frequency band among the resource set. As illustrated in Fig. 6, if the number of all resources included in the resource set is 20 and the number of resources in which a power that exceeds a threshold is measured is 4, a resource occupation ratio is 4/20=0.2.

Instead of the above resource occupation ratio, a free resource ratio may be measured. A free resource ratio is a numerical value that is the number of resources in which a power that does not exceed a configured or pre-defined threshold is measured among all resources included in a resource set divided by the number of all resources included in the resource set. Calculation of the free resource ratio may be performed in a configured or pre-defined period or frequency band among the resource set.

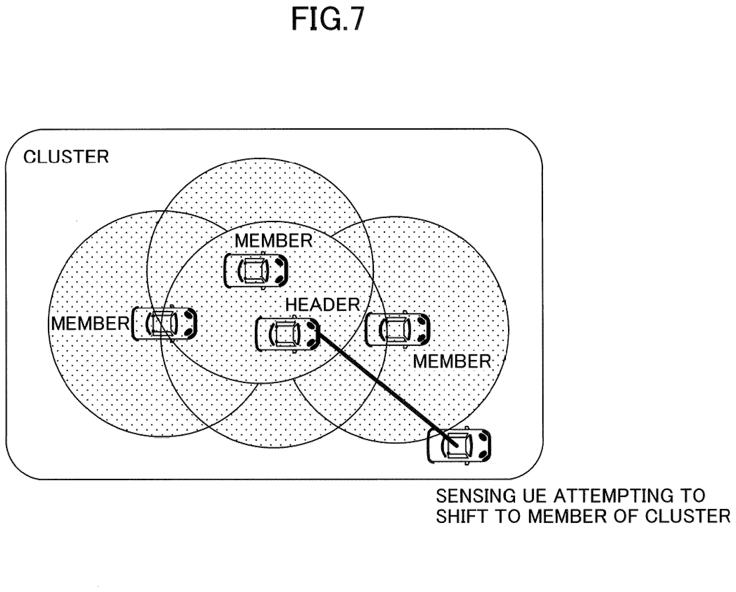

Fig. 7 is a diagram for illustrating a sensing UE transitioning to a member in an embodiment of the present invention. As illustrated in Fig. 7, a sensing UE attempting to transition to a member of a cluster performs sensing of the cluster. If any or a combination of the following conditions 1), 2), and 3) is satisfied in one or more resource sets, the user equipment 20 that is the sensing UE may transition to the member of the cluster.
1) A result of power measurement exceeds a predetermined threshold.
2) A resource occupation ratio falls below a predetermined threshold.
3) A free resource ratio exceeds a predetermined threshold.

The thresholds in the above conditions 1), 2), and 3) may be configured or pre-defined. The above sensed one or more resource sets are candidates to be used as resource sets.

The user equipment 20 selects one or more resource sets associated with the user equipment 20 itself from the resource set candidates. That is, the user equipment 20 selects a cluster associated with the user equipment 20 itself from cluster candidates. A cluster is associated with one or more resource sets. When a plurality of clusters or resource sets are found, the user equipment 20 determines the clusters or resource sets associated with the user equipment 20 itself as indicated in 1) to 4) below.
1) The clusters or resource sets are determined based on UE implementation.
2) The clusters or resource sets are selected randomly from the cluster candidates or resource set candidates.
3) The clusters or resource sets are selected based on any or a combination of a resource set that has the best power measurement result; a resource set that has the lowest resource occupation ratio; and a resource set that has the highest free resource ratio.
4) The clusters or resource sets are selected randomly from resource sets whose power measurement results lie within the top x%; resource sets whose resource occupation ratios lie within the bottom x%; and resource sets whose free resource ratios lie within the top x%. The x% is configured or pre-defined.

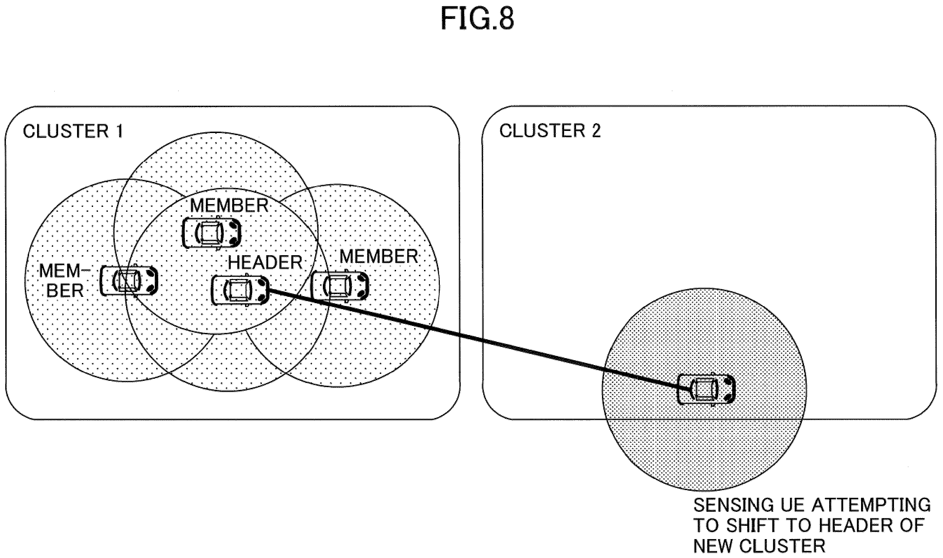

Fig. 8 is a diagram for illustrating a sensing UE transitioning to a header in an embodiment of the present invention. As illustrated in Fig. 8, a sensing UE attempting to transition to a header of a cluster performs sensing of the cluster. If any or a combination of the following conditions 1), 2), and 3) is satisfied in one or more resource sets, the user equipment 20 that is the sensing UE may transition to the header of the cluster.
1) A result of power measurement in the existing cluster falls below a predetermined threshold.
2) A resource occupation ratio of a resource set candidate falls below a predetermined threshold.
3) A free resource ratio of a resource set candidate exceeds a predetermined threshold.

The thresholds in the above conditions 1), 2), and 3) may be configured or pre-defined. The above sensed one or more resource sets are candidates to be used as resource sets. The user equipment 20 selects one or more resource sets associated with the user equipment 20 itself as indicated in 1) to 6) below.
1) The resource set that has the lowest power measurement result is selected.
2) The resource sets are selected randomly from resource sets whose power measurement results lie within the bottom x%. The x% is configured or pre-defined.
3) The resource sets are selected randomly from resource sets having power measurement results that are less than or equal to a threshold and having resource occupation ratios that are less than or equal to a threshold.
4) The resource set having a power measurement result that is less than or equal to a threshold and having the lowest resource occupation ratio is selected.
5) The resource sets are selected randomly from resource sets having power measurement results that are less than or equal to a threshold and having free resource ratios that are greater than or equal to a threshold.
6) The resource set having a power measurement result that is less than or equal to a threshold and having the highest free resource ratio is selected.

If a user equipment 20 supports UE-NW relay, the user equipment 20 may automatically transition to a header, and in this case, selection of one or more resource sets may be performed on any of the above conditions.

If a user equipment 20 is an RSU, the user equipment 20 may automatically transition to a header, and in this case, selection of one or more resource sets may be performed on any of the above conditions.

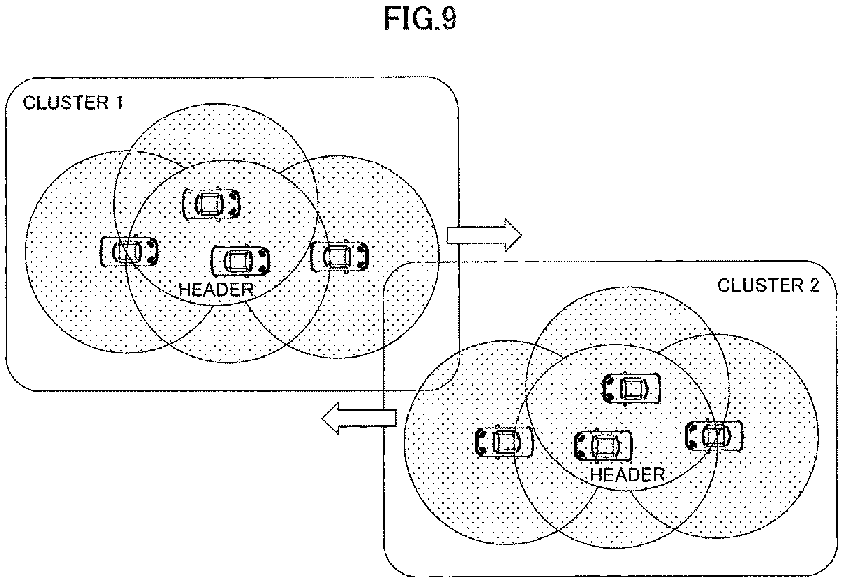

Fig. 9 is a diagram for illustrating an example of an operation of transitioning to a header or member again in an embodiment of the present invention. A user equipment 20 may perform an operation of transitioning to a header or member of a cluster again periodically or via an event trigger. An event occurs if the user equipment 20 moves, for example.

A period of the operation of transitioning to the header or member of the cluster again may be configurable or pre-defined. An event triggering the operation of transitioning to the header or member of the cluster again may be configurable or pre-defined. For example, the following events are ones triggering the operation of transitioning to the header or member of the cluster again.
1) In the case that a timer is set and the timer expires.
2) In the case that k packets are transmitted where k is configured or pre-defined. Or, k may be selected from a configured or pre-defined range.

The following events may be triggers when the user equipment 20 becomes the member of the cluster.
1) In the case that a measurement result of a resource set associated with the user equipment 20 itself falls below a predetermined threshold.
2) In the case that a measurement result of a resource set that is not associated with the user equipment 20 itself exceeds a measurement result of a resource set associated with the user equipment 20 itself by a predetermined threshold.
3) In the case that the user equipment 20 cannot decode a signaling or message from a header of the cluster or in the case that a success rate of decoding falls below a predetermined threshold. The signaling or message from the header of the cluster is, for example, a scheduling grant, data, or another message or signaling.

The following events may be triggers when the user equipment 20 becomes the header of the cluster.
1) In the case that a power measurement result of a non-scheduled resource within a resource set exceeding a predetermined threshold is measured by a header of the cluster.
2) In the case that a header of the cluster cannot decode a scheduled resource in spite of a power measurement result by the header of the cluster exceeding a predetermined threshold or in the case that a ratio of resources that cannot be decoded exceeds a predetermined threshold.

For example, Fig. 9 illustrates a situation where an event when the user equipment 20 becomes the header of the cluster may occur. In clusters 1 and 2 in which the same resource set is associated with headers, if a user equipment 20 belonging to the cluster 1 moves, a user equipment 20 belonging to the cluster 2 moves, and the units of user equipment 20 approach each other or overlap, the possibility arises that a power measurement result of a non-scheduled resource within a resource set exceeding a predetermined threshold is measured by a header of the cluster in the above event, and/or the possibility arises that a header of the cluster is unable to decode a scheduled resource in the above event.

Each threshold applied in the above triggering events may be configured or pre-defined. With respect to the measurement results applied in the above triggering events, the power measurement methods by the sensing UE described in Fig. 5 may be applied.

A header or a member of a cluster may perform the sensing operation and the operation of transitioning to the header or member described in Figs 5-8, in the operation of transitioning to the header or member again. Further, a header of a cluster may notify a neighbor user equipment 20 of transitioning to a header or member again. The neighbor user equipment 20 is notified of transitioning to the header or member again via a PHY layer signaling or higher layer signaling. The header of the cluster may notify the neighbor user equipment 20 of transitioning to the header or member again by a particular sequence. For example, the neighbor user equipment 20 may be notified of transitioning to the header or member again by a particular SLSS sequence. Further, the neighbor user equipment 20 may be notified of transitioning to the header or member again by control information via a MAC CE, RRC signaling, PSBCH, PSCCH, or PSSCH. The PSBCH or PSCCH may be masked with a particular RNTI or an RNTI common to a group. When a member of the cluster receives the notification from the header of the cluster, the member of the cluster initiates the operation of transitioning to the header or member again.

For example, if the operation of transitioning to the header or member again is initiated via the trigger when the user equipment 20 becomes the header of the cluster as in the situation illustrated in the Fig. 9, the header of the neighbor cluster receiving the notification may stop the operation of transitioning to the header or member again.

Instead of the operation of transitioning to the header or member again, a header of a cluster may re-select resource sets. A member of the cluster is notified of the re-selected resource sets via a PHY signaling or higher layer signaling. If the member of the cluster receives the notification, the member of the cluster does not need to perform the operation of transitioning to the header or member again. For example, if the operation of transitioning to the header or member again is initiated via the trigger when the user equipment 20 becomes the header of the cluster as in the situation illustrated in the Fig. 9, the header of the neighbor cluster receiving the notification may stop the operation of transitioning to the header or member again.

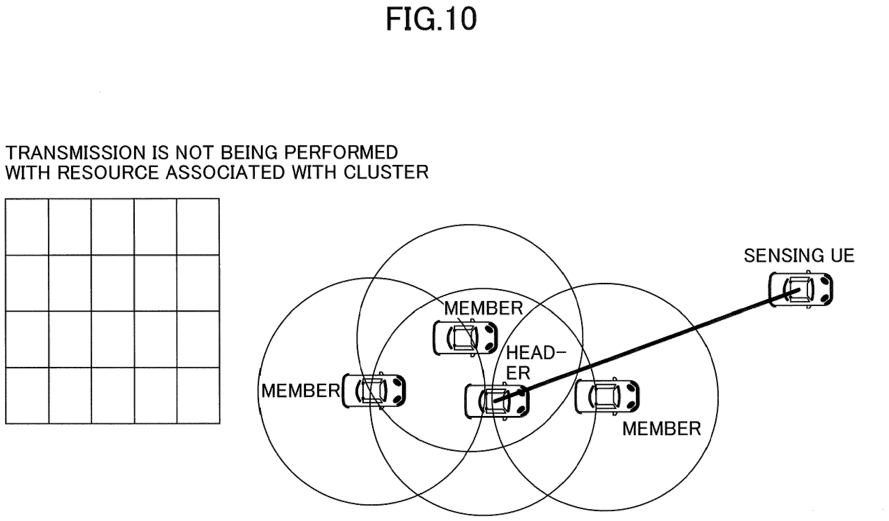

Fig. 10 is a diagram for illustrating an example (2) of a sensing operation in an embodiment of the present invention. In a cluster, there is a case where restrictive transmission is only performed. For example, the case corresponds to a case where density of units of user equipment 20 is low, a case where there is no member associated with a header of a cluster, or the like. If the restrictive transmission is only performed, measurement based on a resource set may not be accurate.

As illustrated in Fig. 10, a situation where transmission is not being performed with a resource associated with a cluster is assumed. A sensing UE cannot find the cluster by sensing or measuring in spite of being neighbor to the cluster because transmission is not being performed with the resource associated with the cluster.

Accordingly, a header of a cluster may transmit a signaling assisting sensing of a neighbor UE in order to maintain a semi-distributed type MAC configuration. The signaling may be transmitted by the header of the cluster instructing a member of the cluster to transmit it. An index of a resource set associated with the cluster may be broadcast as an assistance signaling. The assistance signaling is a sign of the cluster. Instead of the above assistance signaling, a redundant packet having all zero values may be transmitted as an assistance signaling. The redundant packet is limited to having all zero values, but the redundant packet may have other distinguishable values. The assistance signaling may be transmitted via a PHY layer signaling or higher layer signaling. The neighbor user equipment 20 may be notified of the assistance signaling by a particular sequence, for example, a particular SLSS sequence. The neighbor user equipment 20 may be notified of the assistance signaling by control information via a MAC CE, RRC signaling, PSBCH, PSCCH, or PSSCH. The PSBCH or PSCCH may be masked with a particular RNTI or an RNTI common to a group. The assistance signaling may be broadcast periodically or via an event trigger. For example, if a ratio of scheduled resources falls below a particular threshold, broadcasting of the assistance signaling may be performed. The particular threshold may be configured or pre-defined.

Applying a semi-distributed type MAC to a predetermined resource pool may be configured. For example, the application of the semi-distributed type MAC may be configured for each resource pool, for each carrier, or for each band. If a user equipment 20 camps on a resource pool to which a semi-distributed type MAC is applied, a cluster associated with the resource pool is maintained at all times. A hybrid of a semi-distributed type MAC and a distributed type MAC may be applied in one resource pool. For example, if a CBR (Channel busy ratio) in a certain resource pool exceeds a particular threshold that is configured or pre-defined, a semi-distributed type MAC may be applied to the resource pool. A semi-distributed type MAC may be applied specifically to a user equipment 20. For example, only if a cluster is associated with a user equipment 20 to which a semi-distributed type MAC is applied specifically, resource allocation may be performed based on the semi-distributed type MAC. Otherwise, a distributed type MAC may be applied.

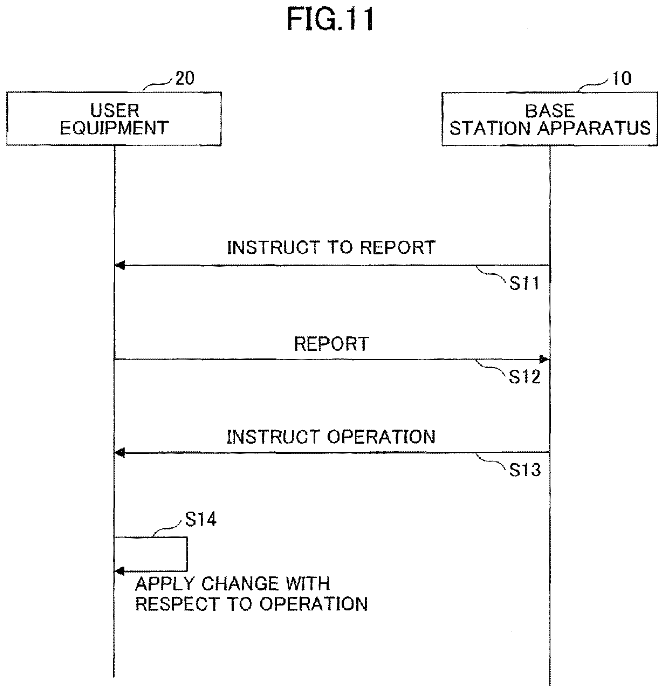

Fig. 11 is a sequence diagram for illustrating operations assisted by a base station apparatus 10 in an embodiment of the present invention. In step S11, the base station apparatus 10 instructs a user equipment 20 to report. In response to the instruction, a header or member of a cluster reports to the base station apparatus 10 via a UL.

Contents reported from the user equipment 20 to the base station apparatus 10 in step S12 may be any or some combination of the followings 1) to 6) .
1) A sensing result of a user equipment 20. The sensing result includes one or more of a power measurement result in one or more resource sets; a resource occupation ratio in one or more resource sets; and a free resource ratio in one or more resource sets.
2) Information indicating whether a user equipment 20 is associated with a cluster or not.
3) Information indicating whether a user equipment 20 is a header or a member. For example, a user equipment 20 that is a header may report, to the base station apparatus 10, that the user equipment 20 is the header.
4) Information indicating an associated resource set. For example, a user equipment 20 that is a header may report, to the base station apparatus 10, the information indicating the associated resource set.
5) The number of members associated with a cluster. For example, a user equipment 20 that is a header may report, to the base station apparatus 10, the number of members associated with the cluster.
6) Buffer status of each user equipment 20 in a cluster. For example, a user equipment 20 that is a header may report, to the base station apparatus 10, the buffer status.

Reporting in step S12 is performed via a PHY layer signaling or higher layer signaling. For example, reporting in step S12 may be performed via UCI, a MAC CE, or RRC signaling. Reporting in step S12 may be performed periodically, via a defined event trigger, or via an instruction from the base station apparatus 10. Based on reporting in step S12, the base station apparatus 10 may determine an instruction in step S13. For example, based on a sensing result reported from a user equipment 20, an instruction for the user equipment 20 to transition to a header or member may be determined.

In step S13, the base station apparatus 10 instructs an operation to the user equipment 20. In response to the instruction, a header or member of the cluster applies a change with respect to the operation (step S14). The operation that is instructed by the base station apparatus 10 to the user equipment 20 in step S13 may be any or some combination of the followings 1) to 5).
1) Performing sensing on one or more configured resource sets.
2) Performing reporting using a UL.
3) Transitioning to a header or member.
4) Performing leaving from the cluster or joining in the cluster on an associated or disassociating header.
5) Performing associating one or more configured resource sets with the user equipment 20, especially in case of being a header.

Instructing the operation by the base station apparatus 10 in step S13 may be performed via DCI, a MAC CE, RRC signaling, or PBCH.

According to the implementation described above, a user equipment 20 can transmit non-periodic data traffic efficiently by resource allocation to which a semi-distributed type MAC is applied. Further, when compared to a distributed type MAC, it is possible to reduce resource conflicts by resource allocation to which a semi-distributed type MAC is applied. Furthermore, the user equipment 20 that is a header can perform resource allocation as a coordinator by applying a semi-distributed type MAC whether within coverage or outside coverage.

That is, it is possible to operate a cluster to which a plurality of terminals belongs and use radio resources efficiently in inter-terminal direct communication.

### <Device Configuration>

Next, functional configuration examples of a base station apparatus 10 and a user equipment 20 that perform the processing and operations described above will be described. Each of the base station apparatus 10 and the user equipment 20 includes functions practicing the implementation described above. However, each of the base station apparatus 10 and the user equipment 20 may comprise only some functions in the implementation.

### <Base station apparatus 10>

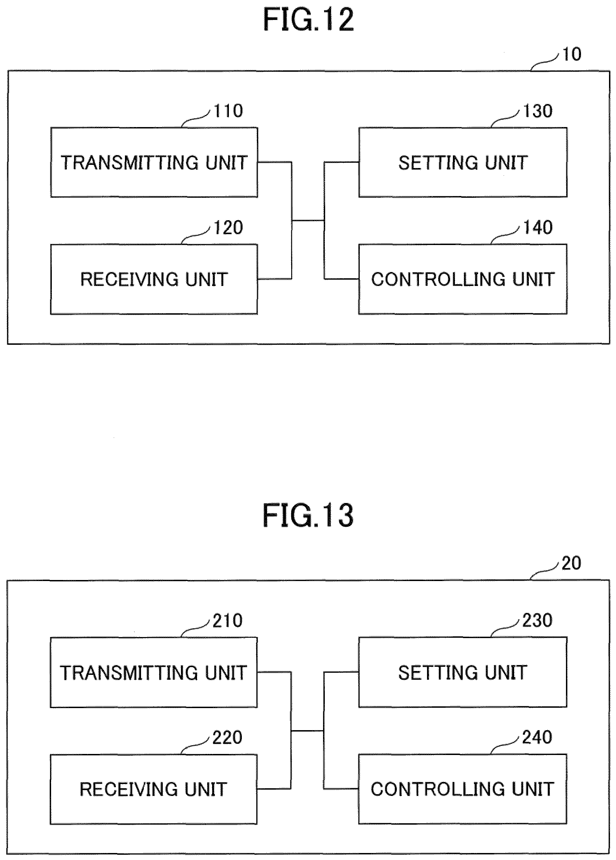

Fig. 12 is a diagram illustrating an example of a functional configuration of a base station apparatus 10. As illustrated in Fig. 12, the base station apparatus 10 comprises a transmitting unit 110, a receiving unit 120, a setting unit 130, and a controlling unit 140. The functional configuration illustrated in Fig. 12 is only an example. Division of the functions and names of functional units may be determined arbitrarily as long as the operations according to the embodiment of the present invention can be performed.

The transmitting unit 110 includes a function that generates a signal to be transmitted to a user equipment 20 side and wirelessly transmits the signal. The receiving unit 120 includes a function that receives various signals transmitted from a user equipment 20, and obtains, for example, information of a higher layer from the received signal. Also, the transmitting unit 110 has a function that transmits NR-PSS, NR-SSS, NR-PBCH, DL/UL control signals and the like to the user equipment 20. Also, for example, the transmitting unit 110 transmits, to the user equipment 20, an instruction for operations related to D2D communication or information instructing to report status of D2D communication, and the receiving unit 120 receives information indicating the status of D2D communication from the user equipment 20.

The setting unit 130 stores pre-set setting information and various pieces of setting information to be transmitted to the user equipment 20 in a storage device, and reads the information from the storage device as appropriate. Contents of the setting information are, for example, information regarding transmit and receive parameters of D2D communication and so on.

The controlling unit 140 performs processing related to setting for the user equipment 20 to perform D2D communication, as described in the implementation. Also, the controlling unit 140 performs processing of notifying the user equipment 20 of information regarding setting of radio communication. A functional unit relating to signal transmission in the controlling unit 140 may be included in the transmitting unit 110 and a functional unit relating to signal reception in the controlling unit 140 may be included in the receiving unit 120.

### <User equipment 20>

Fig. 13 is a diagram illustrating an example of a functional configuration of a user equipment 20. As illustrated in Fig. 13, the user equipment 20 comprises a transmitting unit 210, a receiving unit 220, a setting unit 230, and a controlling unit 240. The functional configuration illustrated in Fig. 13 is only an example. Division of the functions and names of functional units may be determined arbitrarily as long as the operations according to the embodiment of the present invention can be performed.

The transmitting unit 210 generates a transmit signal from transmit data and wirelessly transmits the transmit signal. The receiving unit 220 wirelessly receives various signals and obtains a higher layer signal from the received physical layer signal. Also, the receiving unit 220 has a function that receives NR-PSS, NR-SSS, NR-PBCH, DL/UL/SL control signals and the like transmitted from a base station apparatus 10. Also, for example, the transmitting unit 210 transmits, to another user equipment 20, PSCCH (Physical Sidelink Control Channel), PSSCH (Physical Sidelink Shared Channel), PSDCH (Physical Sidelink Discovery Channel), PSBCH (Physical Sidelink Broadcast Channel) or the like as D2D communication, and the receiving unit 120 receives PSCCH, PSSCH, PSDCH, PSBCH or the like from another user equipment 20. Further, the transmitting unit 210 transmits, to the base station apparatus 10, information indicating status of D2D communication. The receiving unit 220 receives, from the base station apparatus 10, an instruction related to D2D communication or information instructing to report the status of D2D communication.

The setting unit 230 stores various pieces of setting information received by the receiving unit 220 from the base station apparatus 10 or user equipment 20 in a storage device, and reads the information from the storage device as appropriate. The setting unit 230 also stores pre-set setting information. Contents of the setting information are, for example, information regarding transmit and receive parameters of D2D communication and so on.

The controlling unit 240 controls D2D communication with another user equipment 20, as described in the implementation. Also, the controlling unit 240 controls an operation of transitioning to a header of a cluster or a member of the cluster. Also, the controlling unit 240 controls an operation to perform as the header of the cluster or the member of the cluster. Also, the controlling unit 240 receives information related to radio communication from the base station apparatus 10 to control radio communication of the user equipment 20 based on the information, and reports required information to the base station apparatus 10. A functional unit relating to signal transmission in the controlling unit 240 may be included in the transmitting unit 210 and a functional unit relating to signal reception in the controlling unit 240 may be included in the receiving unit 220.

### <Hardware Configuration>

The functional configuration diagrams (Figs. 12 and 13) used in the description of the embodiment of the present invention set forth above illustrate the blocks in the units of functions. These functional blocks (constituent units) are embodied in any combination of hardware and/or software. Means for embodying each functional block is not particularly limited. That is, each functional block may be embodied by one device into which a plurality of elements is physically and/or logically coupled or may be embodied by two or more devices that are physically and/or logically separated and that are connected directly and/or indirectly (for example, in a wired and/or wireless manner).

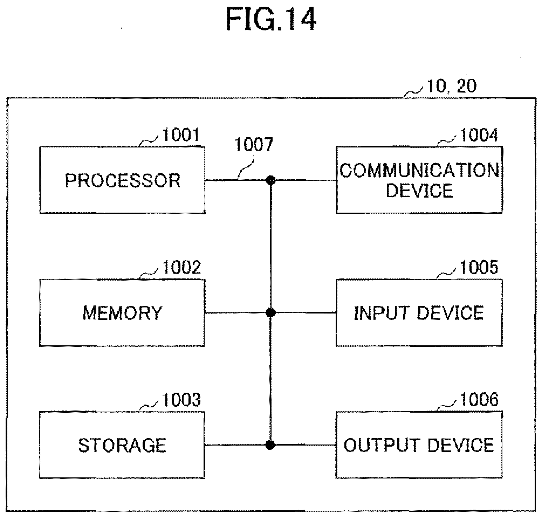

Also, for example, any of a base station apparatus 10 and a user equipment 20 in an embodiment of the present invention may function as a computer that performs the processing according to the embodiment of the present invention. Fig. 14 is a diagram illustrating an example of a hardware configuration of a radio communication device that is a base station apparatus 10 or a user equipment 20 according to an embodiment of the present invention. Each of the base station apparatus 10 and the user equipment 20 described above may be physically configured as a computer device including a processor 1001, a memory 1002, a storage 1003, a communication device 1004, an input device 1005, an output device 1006, a bus 1007, and the like.

In the following description, the term "device" may be interchanged with a circuit, an apparatus, a unit, or the like. The hardware configurations of the base station apparatus 10 and the user equipment 20 may include one or more devices 1001, one or more devices 1002, one or more devices 1003, one or more devices 1004, one or more devices 1005, and one or more device 1006, or may not include some of the devices.

Each function in the base station apparatus 10 and the user equipment 20 are realized by causing hardware such as the processor 1001 and the memory 1002 to read predetermined software (program) and causing the processor 1001 to perform computation and to control communication by the communication device 1004 and reading and/or writing of data in the memory 1002 and the storage 1003.

The processor 1001 controls the entire computer, for example, by operating an operating system. The processor 1001 may be constituted by a central processing unit (CPU) including an interface with peripheral devices, a control device, a computation device, a register, and the like.

The processor 1001 reads a program (program codes), a software module, or data from the storage 1003 and/or the communication device 1004 to the memory 1002, and performs various processing operations in accordance therewith. As the program, a program causing a computer to perform at least some of the operations in the embodiment described above is used. For example, the transmitting unit 110, the receiving unit 120, the setting unit 130, and the controlling unit 140 of the base station apparatus 10 illustrated in Fig. 12 may be embodied by a control program that is stored in the memory 1002 and operated by the processor 1001. Also, for example, the transmitting unit 210, the receiving unit 220, the setting unit 230, and the controlling unit 240 of the user equipment 20 illustrated in Fig. 13 may be embodied by a control program that is stored in the memory 1002 and operated by the processor 1001. Although the various processing operations set forth above have been described as being performed by a single processor 1001, the various processing operations set forth above may be performed simultaneously or sequentially by two or more processors 1001. The processor 1001 may be implemented as one or more chips. The program may be transmitted from a network via an electric communication line.

The memory 1002 is a computer-readable recording medium and may be constituted, for example, by at least one of an ROM (Read Only Memory), an EPROM (Erasable Programmable ROM), an EEPROM (Electrically Erasable Programmable ROM), a RAM (Random Access Memory), and the like. The memory 1002 may be called as a register, a cache, or a main memory (a main storage device). The memory 1002 can store a program (program codes), a software module, and the like that can be executed to perform processing operations according to an embodiment of the present invention.

The storage 1003 is a computer-readable recording medium and may be constituted, for example, by at least one of an optical disc such as a CD-ROM (Compact Disc ROM), a hard disk drive, a flexible disk, a magneto-optical disk (such as a compact disk, a digital versatile disk, or a Blu-ray (registered trademark) disk), a smart card, a flash memory (such as a card, a stick, or a key drive), a floppy (registered trademark) disk, a magnetic strip, and the like. The storage 1003 may be called as an auxiliary storage device. The recording medium described above may be a database including the memory 1002 and/or the storage 1003, a server, or another appropriate medium.

The communication device 1004 is hardware (a transceiver device) for performing communication between computers via a wired network and/or a wireless network and is referred to as, for example, a network device, a network controller, a network card, a communication module, or the like. For example, the transmitting unit 110 and the receiving unit 120 of the base station apparatus 10 may be embodied by the communication device 1004. The transmitting unit 210 and the receiving unit 220 of the user equipment 20 may be embodied by the communication device 1004.

The input device 1005 is an input device (such as, for example, a keyboard, a mouse, a microphone, a switch, a button, a sensor, or the like) that receives an input from the outside. The output device 1006 is an output device (such as, for example, a display, a speaker, an LED lamp, or the like) that performs outputting to the outside. The input device 1005 and the output device 1006 may be configured to be integrated (such as a touch panel).

The devices such as the processor 1001 and the memory 1002 are connected to each other via the bus 1007 for transferring information. The bus 1007 may be constituted by a single bus or may be configured by different buses between the devices.

Each of the base station apparatus 10 and the user equipment 20 may be configured to include hardware such as a microprocessor, a DSP (Digital Signal Processor), an ASIC (Application Specific Integrated Circuit), a PLD (Programmable Logic Device), an FPGA (Field Programmable Gate Array), or the like, or a part or all of the functional blocks may be embodied by the hardware. For example, the processor 1001 may be implemented as at least one of the above hardware modules.

### <Summary of Embodiment>

As described above, according to the embodiment of the present invention, there is provided a user equipment including a measuring unit that executes sensing of a resource set with which signals from one or more other units of user equipment are transmitted; a control unit that determines, based on a measurement result of the resource set by the sensing, whether to operate as a first device that allocates a resource in the resource set associated with a cluster or to operate as a second device to which a resource is allocated by the first device in the cluster formed of a plurality of units of user equipment; and a communication unit that executes communication with the one or more other units of user equipment.

According to the configuration, the user equipment 20 can transmit non-periodic data traffic efficiently by resource allocation to which a semi-distributed type MAC is applied. Further, compared to a distributed type MAC, it is possible to reduce resource conflicts by resource allocation to which a semi-distributed type MAC is applied. Furthermore, the user equipment 20 that is a header can perform resource allocation as a coordinator by applying a semi-distributed type MAC whether within coverage or outside coverage. That is, it is possible to operate a cluster to which a plurality of terminals belongs and use radio resources efficiently in inter-terminal direct communication.

The measurement result of the resource set by the sensing may be any one of the following a), b), c) or any combination of the following a), b), and c): a) a power measurement result in the resource set; b) a ratio at which resources are occupied in the resource set; and c) a ratio of free resources that are not occupied in the resource set. According to the configuration, it is possible to select an appropriate resource set depending on a measurement result of a resource set and perform communication as a header or a member of a cluster.

The control unit may determine whether to operate as the first device or to operate as the second device at each of predetermined periods, upon expiration of a timer, upon completion of transmission of a predetermined number of packets, or upon detecting that a message is unable to be decoded. According to the configuration, it is possible to use radio resources efficiently depending on communication status by determining whether to operate as a header or operate as a member again if the communication status changes, or the like.

Upon operating as the first device, the user equipment may transmit an index of a resource set associated with a cluster or a predetermined redundant packet to another user equipment. According to the configuration, it is possible to obtain information assisting sensing from a header of a cluster if accurate measurement in a resource set by a sensing UE is difficult.

The user equipment may transmit information regarding the measurement result of the resource set by the sensing to a base station apparatus, and may receive information indicating whether to operate as the first device or the second device from the base station apparatus. According to the configuration, the base station apparatus 10 can make an appropriate instruction for the user equipment 20 to operate as a header or a member based on a measurement result of a resource set.

Furthermore, according to the embodiment of the present invention, there is provided a base station apparatus including a receiving unit that receives, from a user equipment, information regarding a measurement result of a resource set by sensing of a resource set with which signals are transmitted from one or more other units of user equipment; and a transmitting unit that transmits, to the user equipment, information indicating whether to operate as a first device that allocates a resource in the resource set associated with a cluster or to operate as a second device to which a resource is allocated by the first device in the cluster formed of a plurality of units of user equipment.

According to the configuration, the base station apparatus 10 can make an appropriate instruction for the user equipment 20 to operate as a header or a member based on a measurement result of a resource set.

### <Supplemental Embodiment>

While the embodiments of the present invention have been described above, the disclosed inventions are not limited to the embodiments, but it could be understood by those skilled in the art that various modifications, alterations, alternatives, replacements, and the like can be made thereto. While specific numerical examples have been used to facilitate understanding of the present invention, the numerical values are only examples and any appropriate values may be used, unless otherwise specified. The sorting of articles in the above description is not essential to the present invention, but matters described in two or more articles may be combined for use if necessary, or matters described in one article may be applied to matters described in another article (unless incompatible). The boundaries of the functional units or the processing units in the functional block diagrams do not necessarily correspond to boundaries of physical components. Operations of two or more functional units may be performed physically by a single component or an operation of a single functional unit may be performed physically by two or more components. Regarding the processing procedure described in the embodiment, the order of the processing operations may be changed unless incompatible. For convenience of explanation of the processing, the base station apparatus 10 and the user equipment 20 have been described using the functional block diagrams, but such devices may be embodied in hardware, software, or a combination thereof. Software operated by the processor of the base station apparatus 10 according to the embodiment of the present invention and software operated by the processor of the user equipment 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Notification of information is not limited to the aspects/embodiments described in this specification, but may be performed using other methods. For example, the notification of information may be performed by a physical layer signaling (such as DCI (Downlink Control Information), UCI (Uplink Control Information), or the like), a higher layer signaling (such as an RRC (Radio Resource Control) signaling, a MAC (Medium Access Control) signaling, broadcast information (MIB (Master Information Block), SIB (System Information Block), or the like), other signals, or any combination thereof. The RRC signaling may be called as an RRC message and may be, for example, an RRC connection setup message, an RRC connection reconfiguration message, or the like.

The aspects/embodiments described in this specification may be applied to systems utilizing LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or next-generation systems to which the systems are extended.

The processing procedures, sequences, flowcharts, and the like of the aspects/embodiments described in this specification may be changed in the order as long as they are not incompatible with each other. For example, in the method described in this specification, various step elements are presented in an exemplary order, but the method is not limited to the presented order.

The specific operations which are performed by the base station apparatus 10 in this specification may be performed by an upper node thereof in some cases. In a network comprising one or more network nodes including the base station apparatus 10, it is obvious that various operations which are performed to communicate with the user equipment 20 can be performed by the base station apparatus 10 and/or another network node (for example, an MME or an S-GW can be considered but the network node is not limited thereto) other than the base station apparatus 10. Although a case where the number of network nodes other than the base station apparatus 10 is one has been illustrated above, a combination of two or more other network nodes (for example, an MME and an S-GW) may be used.

The aspects/embodiments described in this specification may be used alone, may be used in combination, or may be switched with implementation thereof.

The user equipment 20 may also be called as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station apparatus 10 may be called as an NB (NodeB), an eNB (enhanced NodeB), a gNB, a base station, or some other appropriate terms by those skilled in the art.

The terms "determining" and "deciding" as used in this specification may include various types of operations. For example, "determining" and "deciding" may include deeming that to perform judging, calculating, computing, processing, deriving, investigating, looking up (e.g., searching in a table, a database, or another data structure), or ascertaining is to perform "determining" or "deciding." Further, "determining" and "deciding" may include deeming that to perform receiving (e.g., reception of information), transmitting (e.g., transmission of information), input, output, or accessing (e.g., accessing data in memory) is to perform "determining" or "deciding." Furthermore, "determining" and "deciding" may include deeming that to perform resolving, selecting, choosing, establishing, or comparing is to perform "determining" or "deciding." That is, "determining" and "deciding" may include deeming that some operation is to perform "determining" or "deciding."

The expression "based on" as used in this specification does not mean only "based on only," unless otherwise specified. That is, the expression "based on" means both "based on" and "based on at least."

As long as the terms "include" and "including" and derivatives thereof are used in this specification or the appended claims, the terms are intended to have a comprehensive meaning similarly to the term "comprising." Further, the term "or" as used in this specification or the appended claims is intended not to mean an exclusive or.

In the entire disclosure, for example, when an article such as a, an, or the is added in translation into English, such an article may include the plural unless otherwise recognized from the context.

In the embodiments of the present invention, the controlling unit 240 is an example of a notifying unit or a controlling unit. The transmitting unit 210 or the receiving unit 220 is an example of a communicating unit. The controlling unit 140 is an example of a measuring unit or a controlling unit. The transmitting unit 110 or the receiving unit 120 is an example of a communicating unit. The header is an example of a first device. The member is an example of a second device.

Although the present invention has been described in detail, it is obvious to those skilled in the art that the present invention is not limited to the embodiments described in this specification. The present invention can be practiced as modifications and alterations without departing from the scope of the present invention defined by the description in the appended claims. Therefore, the description in this specification is intended to be exemplary and does not have any restrictive meaning to the present invention.

### LIST OF REFERENCE SYMBOLS

- 10: BASE STATION APPARATUS

- 110: TRANSMITTING UNIT
- 120: RECEIVING UNIT
- 130: SETTING UNIT
- 140: CONTROLLING UNIT
- 20: USER EQUIPMENT
- 210: TRANSMITTING UNIT
- 220: RECEIVING UNIT
- 230: SETTING UNIT
- 240: CONTROLLING UNIT
- 1001: PROCESSOR
- 1002: MEMORY
- 1003: STORAGE
- 1004: COMMUNICATION DEVICE
- 1005: INPUT DEVICE
- 1006: OUTPUT DEVICE

## Claims

1. A terminal (20) comprising:
a measuring unit configured to execute sensing of a resource set with which signals from one or more other terminals (20) are transmitted;
a control unit (240) configured to determine, based on a measurement result of the resource set by the sensing, whether to operate as a first device that allocates a resource in the resource set associated with a cluster or to operate as a second device to which a resource is allocated by the first device in the cluster formed of a plurality of units of terminals (20) ; and
a communication unit configured to execute communication with the one or more other terminals (20)
wherein the terminal (20) is configured to transmit information regarding the measurement result of the resource set by sensing to a base station apparatus (10), and to receive information indicating whether to operate as the first device or the second device from the base station apparatus (10).

2. The terminal (20) according to claim 1, wherein the measurement result of the resource set by the sensing is any one of the following a), b), c) or any combination of the following a), b), and c):
a) a power measurement result in the resource set;
b) a ratio at which resources are occupied in the resource set; and
c) a ratio of free resources that are not occupied in the resource set.

3. The terminal (20) according to claim 1, wherein the control unit (240) is configured to determine whether to operate as the first device or to operate as the second device at each of predetermined periods, upon expiration of a timer, upon completion of transmission of a predetermined number of packets, or upon detecting that a message is unable to be decoded.

4. The terminal (20) according to claim 1, wherein, upon operating as the first device, the terminal (20)is configured to transmit an index of a resource set associated with a cluster or a predetermined redundant packet to another terminal (20).

5. A base station apparatus (10) comprising:
a receiving unit (120) configured to receive, from a terminal (20), information regarding a measurement result of a resource set by sensing of a resource set with which signals are transmitted from one or more other terminals (20); and
a transmitting unit (110) configured to transmit, to the terminal (20), information indicating whether to operate as a first device that allocates a resource in the resource set associated with a cluster or to operate as a second device to which a resource is allocated by the first device in the cluster formed of a plurality of units of terminals (20);
wherein the base station apparatus (10) is configured to receive information regarding the measurement result of the resource set by sensing, and to transmit information indicating whether to operate as the first device or the second device.

## Patentansprüche

1. Endgerät (20), umfassend:
eine Messeinheit, die konfiguriert ist, um ein Resourcenset abzutasten, mit dem Signale von einem oder mehreren anderen Endgeräten (20) übertragen werden;
eine Steuereinheit (240), die konfiguriert ist, um auf der Grundlage eines Messergebnisses des Resourcensets, die durch die Abtastung festgelegt wurde, zu bestimmen, ob sie als eine erste Vorrichtung arbeitet, die eine Ressource in dem Ressourcenset zuweist, das mit einem Cluster verbunden ist, oder ob sie als eine zweite Vorrichtung arbeitet, der eine Ressource durch die erste Vorrichtung in dem Cluster zugewiesen wird, der aus einer Vielzahl von Einheiten von Endgeräten (20) gebildet wird; und
eine Kommunikationseinheit, die konfiguriert ist, um die Kommunikation mit einem oder mehreren anderen Endgeräten (20) auszuführen,
wobei das Endgerät (20) konfiguriert ist, um Informationen bezüglich des Messergebnisses des Ressourcensets, die durch Abtasten eingestellt wurde, an eine Basisstationseinrichtung (10) zu übertragen und Informationen von der Basisstationseinrichtung (10) zu empfangen, die angeben, ob es als die erste Vorrichtung oder die zweite Vorrichtung betrieben werden soll.

2. Endgerät (20) nach Anspruch 1, wobei das Messergebnis des Resourcensets, das durch die Abtastung festgelegt wird, eines der folgenden a), b), c) oder eine beliebige Kombination der folgenden a), b) und c) ist:
a) ein Leistungsmessungsergebnis im Ressourcenset;
b) ein Verhältnis, in dem Ressourcen im Resourcenset belegt sind; und
c) ein Verhältnis der freien Ressourcen, die nicht im Resourcenset belegt sind.

3. Endgerät (20) nach Anspruch 1, wobei die Steuereinheit (240) konfiguriert ist, um zu jedem der vorbestimmten Zeiträume, nach Ablauf eines Zeitgebers, nach Abschluss der Übertragung einer vorbestimmten Anzahl von Paketen oder nach Erkennen, dass eine Nachricht nicht decodiert werden kann, zu bestimmen, ob sie als die erste Vorrichtung oder als die zweite Vorrichtung arbeitet.

4. Endgerät (20) nach Anspruch 1, wobei das Endgerät (20) bei Betrieb als erste Vorrichtung konfiguriert ist, um einen Index eines Resourcensets, das einem Cluster oder einem vorbestimmten redundanten Paket zugeordnet ist, an ein anderes Endgerät (20) zu übertragen.

5. Basisstationseinrichtung (10), umfassend:
eine Empfangseinheit (120), die konfiguriert ist, um von einem Endgerät (20) Informationen über ein Messergebnis einer Ressource zu empfangen, die durch Abtasten einer Ressource eingestellt wurde, mit der Signale von einem oder mehreren anderen Endgeräten (20) übertragen werden; und
eine Sendeeinheit (110), die konfiguriert ist, um an das Endgerät (20) Informationen zu senden, die angeben, ob sie als eine erste Vorrichtung betrieben werden soll, die eine Ressource in dem Ressourcenset zuweist, das einem Cluster zugeordnet ist, oder als eine zweite Vorrichtung betrieben werden soll, der eine Ressource durch die erste Vorrichtung in dem Cluster zugewiesen wird, der aus einer Vielzahl von Einheiten von Endgeräten (20) gebildet wird;
wobei die Basisstationseinrichtung (10) konfiguriert ist, um Informationen über das Messergebnis der Ressource zu empfangen, die durch Abtasten eingestellt wurde, und Informationen zu senden, die angeben, ob sie als erste Vorrichtung oder als zweite Vorrichtung betrieben werden soll.

## Revendications

1. Terminal (20) comprenant :
une unité de mesure configurée pour exécuter une détection d'un ensemble de ressources avec lequel des signaux en provenance d'un ou de plusieurs autres terminaux (20) sont transmis ;
une unité de commande (240) configurée pour déterminer, sur la base d'un résultat de mesure de l'ensemble de ressources par la détection, s'il faut fonctionner en tant qu'un premier dispositif qui attribue une ressource dans l'ensemble de ressources associé à un groupe ou bien fonctionner en tant qu'un second dispositif auquel est attribuée une ressource par le premier dispositif dans le groupe formé d'une pluralité d'unités de terminaux (20) ; et
une unité de communication configurée pour exécuter une communication avec l'un ou plusieurs autres terminaux (20)
dans lequel le terminal (20) est configuré pour transmettre, à un appareil de station de base (10), des informations relatives au résultat de mesure de l'ensemble de ressources par la détection, et pour recevoir, en provenance de l'appareil de station de base (10), des informations indiquant s'il faut fonctionner en tant que premier dispositif ou en tant que second dispositif.

2. Terminal (20) selon la revendication 1, dans lequel le résultat de mesure de l'ensemble de ressources par la détection est un résultat quelconque parmi les suivants a), b), c) ou une combinaison quelconque des résultats suivants a), b), et c) :
a) un résultat de mesure de puissance dans l'ensemble de ressources ;
b) un ratio auquel les ressources sont occupées dans l'ensemble de ressources ; et
c) un ratio de ressources libres qui ne sont pas occupées dans l'ensemble de ressources.

3. Terminal (20) selon la revendication 1, dans lequel l'unité de commande (240) est configurée pour déterminer s'il faut fonctionner en tant que premier dispositif ou bien fonctionner en tant que second dispositif à chacune des périodes prédéterminées, à l'expiration d'un temporisateur, à l'achèvement d'une transmission d'un nombre prédéterminé de paquets, ou à la détection d'un message qui ne peut pas être décodé.

4. Terminal (20) selon la revendication 1, dans lequel, lors du fonctionnement en tant que premier dispositif, le terminal (20) est configuré pour transmettre à un autre terminal (20) un indice d'un ensemble de ressources associé à un groupe ou un paquet redondant prédéterminé.

5. Appareil de station de base (10) comprenant :
une unité de réception (120) configurée pour recevoir, en provenance d'un terminal (20), des informations relatives à un résultat de mesure d'un ensemble de ressources par la détection d'un ensemble de ressources avec lequel sont transmis des signaux en provenance d'un ou de plusieurs autres terminaux (20) ; et
une unité de transmission (110) configurée pour transmettre, au terminal (20), des informations indiquant s'il faut fonctionner en tant qu'un premier dispositif qui attribue une ressource dans l'ensemble de ressources associé à un groupe ou bien fonctionner en tant qu'un second dispositif auquel est attribuée une ressource par le premier dispositif dans le groupe formé d'une pluralité d'unités de terminaux (20) ;
dans lequel l'appareil de station de base (10) est configuré pour recevoir des informations relatives au résultat de mesure de l'ensemble de ressources par la détection, et pour transmettre des informations indiquant s'il faut fonctionner en tant que premier dispositif ou en tant que second dispositif.
